# NEW EUROPEAN PATENT SPECIFICATION

(11) **EP 0 327 400 B2**
(45) Date of publication and mention of the opposition decision: **04.12.1996**
(45) Mention of the grant of the patent: 14.07.1993
(21) Application number: 89301108.0
(22) Date of filing: 03.02.1989
(51) Int. Cl.: B01D 15/04, B01J 39/20, B01J 41/14, C13K 11/00

(54) **Chromatographic separations using ion-exchange resins**
Chromatographische Trennungen mit Ionenaustauschharzen
Séparation chromatographique utilisant des résines d'échange d'ions

(30) Priority: 05.02.1988 US 152618
(43) Date of publication of application: 09.08.1989
(73) Proprietor: THE DOW CHEMICAL COMPANY, Midland Michigan 48640-1967 (US)
(72) Inventor: Dhingra, Yog Raj, Midland Michigan 48640 (US); Pynnonen, Bruce W., Midland Michigan 48640 (US)
(74) Representative: Burford, Anthony Frederick

(56) References cited:
- EP-A- 0 098 130
- EP-A- 0 101 943
- EP-B- 0 051 210
- WO-A-85/04885
- DD-A- 243 699
- GB-A- 728 508
- US-A- 4 472 203
- Welstein et al:"Ion Exchange Technology", Eds. Naden and Street, Society of Chemical Industry; pp. 466 - 471

## Description

This invention relates to chromatographic separations, particularly industrial scale chromatographic separations made using an ion-exchange resin as the separating medium.

Chromatographic separations of various substances can be accomplished using ion exchange resins as the stationary phase. Such processes use anion or cation exchange resins to separate mixtures of organic compounds, mixtures of organic compounds and salts, mixtures of acids and salts, and salt mixtures. Of particular commercial importance is the separation of fructose from glucose and oligosaccharides in the production of high fructose corn syrup (HFCS). In this process, mixtures of glucose and fructose are passed through one or more columns of a strong acid type ion exchange resin, most typically in the calcium form. The passage of the fructose through the column is retarded relative to that of the glucose, so there can be obtained separate product streams containing high proportions of fructose and glucose. The high fructose-containing stream is then used as a sweetener for many foodstuffs, such as soft drinks. This process is illustrated by Welstein and Sauer in "Separation of Glucose and Fructose: Effects of Resin Characteristics on Separation", in Ion Exchange Technology, Naden and Streat, eds. Society of Chemical Industry, London, pp. 466-471.

The ion-exchange resin used in such chromatographic separations is typically a plurality of cross-linked copolymer particles which contain anion or cation-exchange groups. Previous to this invention, this resin was a conventional gel-type resin, i.e., one in which the copolymer is prepared in a one-step suspension polymerisation process using a low to moderate level of cross-linker and little or no inert diluent. See, for example, US-A-3,044,905.

Although good chromatographic separations can be achieved with such conventional gel resins, improvements which result in a faster, more efficient and/or higher yield operation of the column are always desirable. All other things being equal, faster exchange kinetics would provide several decided advantages. For example, at a given purity and yield, faster exchange kinetics would permit the column to be operated at higher feed rates. Alternatively, higher yields and/or product purities could be obtained at equivalent operating conditions if the resin had improved kinetics. Another advantage is that less desorbing solvent could be used, thereby reducing the expense of separating same from the product. Faster kinetics would also allow the use of larger resin particles, which permits a faster feed rate and/or higher feed concentration, thereby obtaining equal or better yield and purity without increasing pressure drop across the bed. A resin having faster kinetics would also permit the feed concentration to be increased in order to obtain a higher production rate.

Besides kinetics, another important parameter of a resin is its flow characteristics, i.e., the ease with which a liquid flows through a bed of the resin. It is desirable that the mobile phase move rapidly through the resin at low pressures. The equipment normally used in commercial chromatographic separation cannot withstand high pressures, so the flow rate cannot be greatly increased merely by increasing the pressure on the mobile phase.

It has been found that most modifications which improve the kinetics of conventional ion-exchange resins simultaneously diminish their flow characteristics. The kinetics of the resin can be improved by decreasing the particle size or increasing the water retention capacity by reducing cross-linking. Unfortunately, both of these modifications diminish the flow characteristics of the resin so that, at a given pressure, a lower rate of flow of the mobile phase is obtained. In practice, the benefit of the improved kinetics is at least offset by the undesirable worsening of the flow characteristics.

Accordingly, it would be desirable to provide a process for the chromatographic separation of a mixture of two or more materials, using an ion-exchange resin as the stationary phase, wherein a faster, more efficient or higher purity separation is achieved.

In one aspect, this invention is a process for the chromatographic separation of a liquid mixture comprising at least a first component and a second component into a recoverable stream rich in said first component and another recoverable stream rich in said second component, comprising
(a) contacting said liquid mixture with a bed of an ion-exchange resin having an average particle size of from 170µm to 600µm,
(b) eluting said liquid mixture such that the liquid mixture passes through said resin bed under conditions such that the rate of passage of said first component through the resin bed is retarded relative to the rate of passage of said second component, and
(c) recovering a product stream rich in said first component and another product stream rich in said second component,
in which the ion-exchange resin has been prepared by functionalizing a gel-type copolymer made in a multi-stage polymerization process, and has an apparent cross-link density as determined by the swelling characteristics of the resin of at least 1.2 times its actual cross-link density and a water retention capacity, when fully functionalized in the calcium or chloride form, of at least 40 percent by weight.

The use of the resin as described herein unexpectedly exhibits faster kinetics than conventional gel resins with substantially equivalent or better flow characteristics. The use of this resin provides several advantages, including one or more of (1) permitting faster production rates at an equivalent pressure drop, yield and purity; (2) obtaining a higher yield at equivalent operating conditions; (3) obtaining a higher purity product stream at equivalent operating conditions; (4) the ability to use less desorbing solvent (eluent), and/or (5) the ability to use a higher concentration of starting material.

In this invention, a mixture is separated into two or more product streams each of which contains a higher proportion (relative to the total solutes) of one of the components of the mixture than did the original mixture. The benefits of this invention, i.e., faster and/or more efficient separations, are largely independent of the composition of the mixture to be separated. Accordingly, any liquid mixture of components which can be separated with ion-exchange resins can be used herein. Ion retardation, ion exclusion and ligand-exchange types of chromatography can be practiced according to this invention. Preferably the components to be separated are organic compounds, mixtures of organic compounds and inorganic salts, mixtures of inorganic compounds, mixtures of acids and salts and salt mixtures which are soluble or miscible in water or a polar organic compound, and more preferably are soluble or miscible in water. Examples of such mixtures include mixtures of organic alcohols, organic amines, organic glycols, mono-, di- and polysaccharides, proteins, amino acids, and crude sugars (as in the production of sugar from beet molasses). Of particular interest are mixtures of fructose and glucose, optionally containing oligosaccharides.

As mentioned before, the mixture to he separated must be a liquid. Whenever one or more of the components of the mixture is a solid at the temperature of the separation, a solvent therefore may be used, provided that the solvent does not undesirably interfere with the separation or react with the ion exchange resin. Preferably the solvent used is water, a polar organic solvent, or other solvent miscible with water, as these swell the resin, thereby facilitating the diffusion of the components of the mixture in and out of the resin particles. Non-polar solvents tend to be excluded from the resin particles, thereby reducing their effectiveness.

In conducting the process of this invention, the mixture is passed through a bed of a certain ion exchange resin. The ion exchange resin comprises a plurality of anion or cation exchange groups which are attached to a cross-linked copolymer matrix. The nature of the functional groups depends somewhat on the particular materials being separated. In the preferred sugar separations, the functional groups preferably are strong or weak acid groups, more preferably are strong acid groups, and most preferably are sulfonic acid groups. The functional groups generally are associated with a counterion. The choice of counterion also depends on the particular materials being separated. In the case of cation-exchange groups, the counterion is typically a hydrogen ion, a metal ion or an ammonium ion. Preferably, the counterion is an alkali metal or an alkaline earth metal ion. In general, more preferred ions include sodium, potassium, calcium, strontium, barium, lead and magnesium. For a fructose/glucose separation, the most preferred counterion is calcium. In the case of anion-exchange groups, halide ions, especially chloride, are preferred.

The resin is further characterized in that it exhibits a water retention capacity, when fully functionalized in the calcium as chloride form, of at least 40 percent by weight and has an apparent cross-link density of at least 1.2, preferably at least 1.4 times its actual cross-link density. For the purposes of this invention, "apparent cross-link density" is determined with reference to the swelling characteristics of a conventional single step gel resin in water. Conventional gel resins, i.e., those prepared in a single step polymerization, exhibit swelling characteristics in water which are related to the proportion of cross-linking monomer used in their production. Accordingly, the proportion of cross-linking monomer used in making a conventional gel resin can be determined, to a high degree of accuracy, by measuring its swell characteristics. The cross-line density indicated by the resin's swelling characteristics is referred to herein as its "apparent cross-link density". An alternative method of determining apparent cross-link density is to swell the copolymer with toluene prior to functionalization. The amount of swelling is related to the cross-link density of a conventional single stage gel copolymer, as described in US-A-4,564,644 (corresponding to EP-A-0101943). It has been found that the resins useful in this invention exhibit apparent cross-link densities, as indicated by their swelling characteristics, which are at least 1.2 times as great as the actual proportion of cross-linking monomer used. The actual cross-link density refers to the proportion of polyfunctional monomer used in preparing the copolymer, expressed as a weight percentage of the monomers used. Actual cross-link density can be determined by analytical techniques such as infrared spectroscopy, pyrolysis gas chromatography and nuclear magnetic resonance.

Water retention capacity can be determined by swelling a weighed amount of resin with water, removing excess water and weighing the fully swollen resin. The resin is then dried on a moisture balance until a constant weight is obtained. Water retention capacity is the ratio of water imbibed to the total combined weight of the resin plus imbibed water. Water retention capacity, when fully functionalized in the calcium or chloride form, is advantageously at least 40 percent. However, for the preferred resins having a particle size in excess of 225µm, water retention capacity is preferably at least 43 percent, more preferably at least 45 percent and most preferably 45 to 58 percent. It is noted that the water retention capacity of any resin depends on the counterion. As used herein, the water retention capacity of a cation exchange resin is measured while in the calcium form, and that of an anion-exchange resin is measured while in the chloride form.

The resin has an average particle size of from 170 to 600, preferably 275 to 500, most preferably 300 to 450µm. The benefits of this invention are particularly seen with the use of resins having particle sizes in excess of 300µm. In addition, it preferably has a relatively narrow particle size distribution, with at least 50 volume percent and preferably at least 90 volume percent of the particles having a diameter which is between 0.9 to 1.1 times the average diameter.

Resins useful in this invention, and which frequently have the foregoing characteristics, are conveniently prepared from copolymers which are themselves prepared in a multi-stage polymerization process. In this invention, a multi-stage polymerization is a polymerization in which the monomers used are added in two or more increments, each increment comprising at least 5 percent, preferably at least about 10 percent of the weight of the monomers. Each increment is followed by complete or substantial polymerization of the monomers added in such increment before the addition of subsequent increments. The so-called seeding techniques, as well as continuous or semi-continuous staged polymerizations as described in US-A-4,419,245 (corresponding to EP-A-0098130), GB-A-1,292,226, and JP-A-36-2192 (March 28, 1961), are multi-stage polymerizations for the purposes of this invention.

The multi-stage polymerization techniques used in preparing the copolymer can vary in terms of the amount of monomers used in each stage, the proportion of cross-linking monomer used in each stage, and the conditions under which the monomers are added in each stage.

In the so-called batch-seeding process, seed particles comprising 10-85 percent of the weight of the product copolymer are produced from a first monomer mixture in a first step. In a subsequent step, a monomer mixture containing a free radical initiator is added to the seed particles, imbibed thereby, and then polymerized. This process is characterized by the presence of a free radical initiator in the monomer mixture which is imbibed by the seed particles, and by adding the monomer mixture to the seed particles under conditions so that substantially no polymerization of the monomer mixture occurs until it is fully imbibed by the seed particles. In this process, the seed particle is advantageously prepared from a monomer mixture containing 0.05 to 8, preferably 1 to 6, more preferably 2 to 5 weight percent of a cross-linking monomer. The monomer mixture imbibed by the seed may contain 1 to 15, preferably 4 to 10 weight percent cross-linking monomer, provided that the proportion of cross-linking monomers in all monomers used in making the copolymer is 2 to 7, preferably 3 to 5.5 weight percent.

A related multi-stage process involves preparing seed particles as described in the preceding paragraph, and then adding to it, under polymerization conditions, a monomer mixture containing a free radical initiator. In this process, little or no protective colloid is used in order to facilitate the rapid imbibition of the monomer mixture by the seed particles. The proportion of cross-linking monomer used in this process is similar to that described with respect to the batch-seeding process. Such process is described in US-A-4,419,245 (corresponding to EP-A-0098130). This process is less preferred due to the generation of very small size by-product particles.

In preferred processes, the polymerization is characterized in that in the last polymerization stage, a monomer mixture containing substantially no free radical initiator is added under polymerization conditions to a copolymer formed in preceding polymerization stages which contains a source of free radicals. The monomer mixture is imbibed by the copolymer and polymerized therein.

In this preferred process, the last polymerization stage employs a monomer mixture containing substantially no free radical initiator. This mixture, which preferably comprises 10 to 80, preferably 25 to 75 weight percent of the final copolymer particles, is added to the suspension under polymerization conditions. The copolymer particles formed in earlier stages contain a source of free radicals so that, upon migration to the copolymer particles, the monomer mixture polymerizes therein. Such free radical source may be a previously imbibed initiator, or the residue of a partially polymerized monomer mixture from a preceding polymerization stage. Such a process is described in US-A-4,564,644 (corresponding to EP-A-0101943). Using this process, resins having excellent physical and osmotic properties are prepared.

In one embodiment of the preferred process, the copolymer is prepared by (a) in a first step swelling seed copolymer particles with a first monomer mixture containing 1 to 8, preferably 2 to 6, more preferably 2 to 5 weight percent cross-linking monomer, and partially polymerizing said monomer mixture. These seed particles advantageously comprise 10 to 70, preferably 25 to 60 percent of the weight of the final product copolymer. Such monomer mixture is advantageously polymerized in this stage to 20 to 90, preferably 50 to 75 percent conversion. The partially polymerized particles are then cooled below polymerization temperature, and a second monomer mixture, containing 1 to 10, preferably 2 to 8, more preferably 2 to 6 weight percent cross-linking monomer but substantially no free radical initiator, is added and imbibed by the particles. The swollen particles are then again exposed to polymerization temperatures until the polymerization is completed.

In an especially preferred process, a seed particle comprising 5 to 50, preferably 10 to 40 weight percent of the final copolymer is formed. This seed is prepared from a monomer mixture containing a relatively low, i.e., 0.05 to 5, preferably 0.2 to 4 weight percent, proportion of cross-linking monomer. This seed is then imbibed with a monomer mixture containing a free radical initiator and a substantially higher level of cross-linking monomer, i.e., from 2 to 15, preferably 4 to 10 weight percent cross-linking monomer. This imbibed monomer mixture advantageously comprises 5 to 40, preferably 10 to 25 weight percent of the product copolymer. When the imbibed monomer mixture comprises more than 10 weight percent of the polymer, it is preferred that it contain no more than 10, preferably no more than 8 weight percent cross-linking monomer. This imbibed monomer is partially polymerized, advantageously to a conversion of 10 to 80 percent, and then, under polymerization conditions, is added a monomer feed over a period of 0.5 to 8 hours. This monomer feed contains no free radical initiator, and contains from 0 to 8, preferably 2 to 6 weight percent cross-linking monomer. The proportions of cross-linking monomer in each monomer mixture used in this process are selected together so that in the aggregate, the proportion of cross-linking monomer is 1 to 8, preferably 2 to 6, more preferably 3 to 6 weight percent. After the addition of the monomer feed, polymerization is completed.

The polymerization is advantageously and preferably conducted as a suspension polymerization process, wherein the monomers are dispersed as a plurality of droplets in a continuous aqueous phase and polymerized therein. In this process, staged polymerization is readily accomplished by forming a suspension of an initial increment of monomers, wholly or partially polymerizing same, and then adding the remaining monomers in one or more increments. Each increment may be added at once, or continuously. Due to the insolubility of the monomers in the aqueous phase and their solubility in the copolymer particles, the monomers migrate to the copolymer particles, are imbibed thereby and polymerize therein.

The monomers used herein are addition polymerizable ethylenically unsaturated compounds. Such monomers are well-known in the art and reference is made to Polymer Processes, edited by Calvin E. Schildknecht, published in 1956 by Interscience Publishers, Inc., New York, Chapter III, "Polymerization in Suspension" by E. Trommsdorf and C. E. Schildknecht, pp. 69-109 for purposes of illustration. In Table II on pp. 78-81 of Schildknecht are listed diverse kinds of monomers which can be employed in the practice of this invention. Of such suspension polymerizable monomers, of particular interest herein are the water-insoluble monomers including the monovinylidene aromatics such as styrene, vinyl naphthalene, alkylene-substituted styrenes (particularly monoalkyl-substituted styrenes such as vinyltoluene and ethyl vinylbenzene) and halo-substituted styrenes such as bromo- or chlorostyrene, the polyvinylidene aromatics such as divinylbenzene, divinyltoluene, divinyixylene, divinylnaphthalene, trivinylbenzene, divinyldiphenyl ether, and divinyldiphenylsulfone; esters of α,β-ethylenically unsaturated carboxylic acids, particularly acrylic or methacrylic acid, such as methyl methacrylate, ethylacrylate, diverse alkylene diacrylates and alkylene dimethacrylates, and mixtures of one or more of said monomers. Of said monomers, the monovinylidene aromatics, particularly styrene or a mixture of styrene with a monoalkyl- or halo-substituted styrene, the polyvinylidene aromatics, particularly divinylbenzene; esters of α,β-ethylenically unsaturated carboxylic acids, particularly methyl methacrylate or methacrylonitrile or mixtures containing methyl methacrylate or methacrylonitrile, particularly a mixture of styrene and divinylbenzene or styrene, divinylbenzene and methyl methacrylate are preferably employed herein. These monomers are suitably used in any stage of the polymerization process, as well as the preparation of seed particles, which may be used in this invention in order to control particle size and uniformity. The monomers used in each polymerization stage may be the same or different as those used in the other stages.

Copolymers having an extractable seed are advantageously prepared using a lightly cross-linked seed particle which is insoluble in the amount and type of monomers used in the subsequent polymerization stages, but when active ion-exchange sites are attached thereto, becomes water-soluble and is extractable from the bead when immersed in water. Beads prepared having such extractable seeds will contain small voids when all or a portion of the seed is removed.

In conducting the suspension polymerization, it is advantageous to use a suspending agent, such as gelatin, polyvinyl alcohol, sodium methacrylate, carboxymethylmethylcellulose, surfactants such as sodium lauryl sulfate, and sulfonated polystyrenes. In addition, the suspension may contain polymerization inhibitors, dispersants, and other materials advantageously employed in the suspension polymerization of ethylenically unsaturated monomers.

The copolymer particles are converted to anion- or cation-exchange resins using techniques well-known in the art for converting cross-linked addition polymers of mono- and polyethylenically unsaturated monomers to such resins. Sufficient functional groups are introduced to the copolymer to provide the resin with a water retention capacity, on a fully functionalized basis, of at least 40 percent by weight. In the preparation of anion-exchange and chelating resin from poly(vinylaromatic) copolymer particles such as cross-linked polystyrene beads, the beads are advantageously haloalkylated, preferably halomethylated, most preferably chloromethylated, and the active ion-exchange groups subsequently attached to the haloalkylated copolymer. Methods for haloalkylating the copolymer particles and subsequently attaching weak base or chelating groups are also well-known in the art. Illustrative of such are US-A-2,642,417; 2,960,480; 2,597,492; 2,597,493; 3,311,602: 2,632,000; 2,632,001 and 2,992,544 and Ion Exchange by F. Helfferich, published in 1962 by McGraw-Hill Book Company, N.Y.. In general, the copolymer particles are haloalkylated by swelling the copolymer with a haloalkylating agent and reacting the copolymer with the haloalkylating agent in the presence of a Friedel-Crafts catalyst. Amine ion-exchange groups are suitably attached to the haloalkylated copolymer by heating it in the presence of at least a stoichiometric amount of ammonia or an amine. Chelating groups are advantageously attached to the haloalkylated copolymer by reaction with an amino acid or an amino pyridine. Chelating groups can also be introduced to an aminated copolymer by reaction with a carboxyl-containing compound such as chloroacetic acid.

Cation-exchange resins can be prepared from the copolymer using methods described, for example, in US-A-3,266,007; 2,500,149; 2,631,127; 2,664,801; and 2,764,564 and F. Helfferich, supra. In general, strong acid resins are prepared by reacting the copolymer with a sulfonating agent such as sulfuric or chlorosulfonic acid or sulfur trioxide. The resin can be converted to the desired form by contacting it with a saturated aqueous solution of a salt or base containing the desired counterion. For example, the resin can be converted to calcium form by contacting it with a CaCl₂or Ca(OH)₂ solution. The resin can be converted to other forms in like manner using suitable water-soluble salts of the desired metal.

Resins in which only a specific region of the copolymer is functionalized may also be used in this invention. Examples of such resins are those in which only the exterior portion, or shell, is functionalized. Such a resin will exhibit a water retention capacity which is lower than that of a fully functionalized resin. However, such resin is useful in this invention if its water retention capacity times 5.2 meq/g divided by its dry weight capacity is at least 40 percent, preferably at least 43 percent. Such a resin would have a water retention capacity, on a fully functionalized basis, of 40% or more, as required herein.

In the process of this invention, the mixture to be separated is passed through a bed of the ion-exchange resin under conditions such that the passage of one component thereof through the resin is retarded relative to that of other components of the mixture. After the mixture is placed in the bed, it is eluted in known manner using a solvent for the components of the mixture. In this manner, the product emerging from the bed will comprise a first eluted stream which is deficient in the component which is retarded, and a later eluted stream which is rich in the component which is retarded. Processes for chromatographic separations using ion-exchange resins are well-known, and are described, for example, by Wankat, Large-Scale Adsorption and Chromatography, CRC Press, Inc., Boca Raton, Fla. (1986), and US-A-4,182,633 and 2,985,589.

The conditions of the separation will depend to a large extent on the particular mixture being separated. In general, the temperature at which the separation is conducted is limited by the freezing point and viscosity of the mixture being separated, as well as the boiling point of the mixture, and the temperature at which the components of the mixture or the resin itself begins to decompose. Temperatures of 20°C to 100°C are generally preferred. The concentration of the components of the feed mixture in any solvent which may be used advantageously is 1 to 100 percent, although it is generally preferred to use as concentrated a feed mixture as possible in order to avoid removing large amounts of solvent from the product streams. The feed concentration also depends somewhat on temperature, as highly concentrated solutions of some materials, such as sugars, tend to be highly viscous at lower temperatures. The flow rate used may vary widely, and is again partially dependent on the particular mixture being separated. A flow rate of 0.1 to 20, preferably 0.25 to 5, more preferably 0.4 to 2 bed volumes (a volume of fluid equal to the volume of the resin bed) per hour can be used in most separations. The volume of desorbing solvent (eluent) used can vary widely, and is not particularly critical. In general, it is preferred to minimize the use of desorbing solvent so that a smaller quantity must be removed from the product streams. For example, in continuous processes, 0.1 to 20, preferably 1 to 8, more preferably 2 to 4 times the volume of the feed mixture can be used. In batch or pulsed mode processes, up to 50 bed volumes are advantageously used.

In the preferred fructose/glucose separation, an aqueous solution containing a mixture of fructose and glucose, such as is obtained from isomerization processes is passed through the resin bed and eluted with water, so that there is obtained as a product a mixture containing a higher relative concentration of fructose. The product mixture advantageously contains at least 50 percent fructose, preferably at least 55 percent fructose, more preferably 55 to 99 percent fructose. The separation is preferably conducted at a temperature of 20°C to 80°C, more preferably 40°C to 70°C, most preferably 50°C to 70°C, in order to minimize viscosity and microbial growth without substantially degrading the sugars. Feed concentration is advantageously 30 to 75, more preferably 45 to 63, most preferably 50 to 60 percent by weight. Flow rates are advantageously 0.1 to 20, preferably 0.25 to 2.5, and more preferably 0.4 to 1.5 bed volumes per hour. Eluent volumes are advantageously 0.1 to 20, preferably 1 to 8, more preferably 2 to 4 times the feed volume. Suitable techniques of sugar separations are disclosed in US-A-4,182,633 and 2,985,589, discussed before.

Although a straight elution process can be used, greater efficiency and better separations can be obtained commercially with the use of recycling or countercurrent, simulated countercurrent or pseudo-moving bed (simulated moving bed) processes. Such processes are described, for example, in Wankat, supra. Food Processing, July 1979, pp. 74-75. Chemical Engineering, January 24, 1983, pp. 50-52. and Bieser and de Rosset. "Continuous Countercurrent Separation of Saccharides with Inorganic Adsorbents", Die Stärke, Jahrg. 1977, No. 11, pp. 392-397.

The following examples are provided to illustrate the invention, but are not intended to limit the scope thereof. All parts and percentages are by weight unless otherwise indicated.

### Example 1

### A. Preparation of Ion-exchange Resin in Multi-stage Polymerization Process

In a suitable polymerization kettle is formed a suspension of 160 parts of seed copolymer particles uniformly having an average diameter of about 165µm in 600 parts of water. The seed particles are a copolymer of a monomer mixture of styrene and 0.2 percent active divinylbenzene (DVB). To this suspension are added 200 parts of a mixture of a styrene/divinylbenzene mixture containing 8.5 percent active divinylbenzene, in which a peroxide initiator is dissolved. This mixture is imbibed by the seed particles over a 30-minute period at room temperature with agitation. Then, 200 parts of an aqueous solution containing a surfactant and a protective colloid (gelatin) is added. The kettle is sealed, nitrogen purged and heated up to 80°C, at which temperature polymerization of the monomers in the initial swell begins. After two hours of polymerization, a final stage polymerization is begun by continuously adding 440 parts of a styrene/divinylbenzene mixture (2 percent active DVB) over a four-hour period while maintaining the polymerization temperature at 80°C. The reactor is then heated an additional two hours at 80°C followed by another two hours at 110°C. The resulting copolymer particles are cooled, cleaned up and sulfonated to provide a cation exchange resin having a dry weight capacity of 5.20 meq/g, water retention capacity of 52.7 percent in the calcium form and a mean diameter of 430µm in the calcium form. This resin is designated Sample No. 1 herein.

### B. Chromatographic Performance Testing

A portion of resin Sample No. 1 is placed in a 25 mm x 1280 mm jacketed glass chromatography column with an attached expansion column. The resin is backflushed with degassed deionized water followed by two hours backflushing with an aqueous CaCl₂ solution (7 g CaCl₂/100 ml solution). The resin is then equilibrated with the CaCl₂ solution for at least six hours, tapped down to provide a uniform packing, and sealed. The column is then flushed with degassed deionized water and heated to 60°C. A total of about 78 ml of a hot (60°C) commercial high fructose corn syrup of 50 percent dissolved solids content is fed into the column at a rate of 11-13 ml/min. The composition of the solids is fructose: 41-43 percent; glucose: 50-52 percent; oligosaccharides: 6-7 percent. Immediately after the syrup is loaded on the column, it is eluted with 60°C degassed deionized water, again at a rate of about 11-13 ml/min. Samples of the effluent from the column are collected at half-minute intervals and quantitatively analyzed for the individual components eluting from the column. The experiment is continued until the product stream contains less than 1 percent dissolved solids. The glucose is eluted faster than the fructose, so the earlier samples are rich in glucose and the later fractions are rich in fructose. The average production rate, in pounds of fructose per cubic foot of resin per hour (kg/m³.h) at 80 percent purity, the average concentration of carbohydrate in the product cut, and the percent yield are reported in Table I following.

Percent yield is determined from the consecutive samples collected at the end of the experiment which cumulatively have a fructose purity of 80%, i.e., the weight ratio of fructose to total carbohydrates contained in the samples, is 80 percent.

The percent yield is 100 times the total amount of fructose contained in those samples divided by the total amount of fructose recovered before the experiment is terminated. The percent yield is a measure of the comparative separation efficiency of different resins.

For comparison, the foregoing separation is attempted using an ion-exchange resin prepared from copolymer particles made in a conventional one-step process from monomers having an active divinylbenzene content of 6 percent (Comparative Sample A). The resin has a dry weight capacity of about 5.2 meq/g, a water retention capacity of about 48-51 percent in the calcium form and an average diameter of 390µm in the calcium form. The results are as reported in Table I. This resin is seen to provide a poorer separation, a lower production rate and a lower product concentration, meaning that the column provides less purified product and more water must be removed from the product.

As a further comparison, a conventional one-step resin similar to that used in Comparative Sample A is used to effect a like separation, except this time the particle size is only 350µm in the calcium form (Comparative Sample B). This resin is expected to provide a more efficient separation than the larger resins. The results are as reported in Table I. The production rate and the average carbohydrate concentration are less than that provided by Sample No. 1.

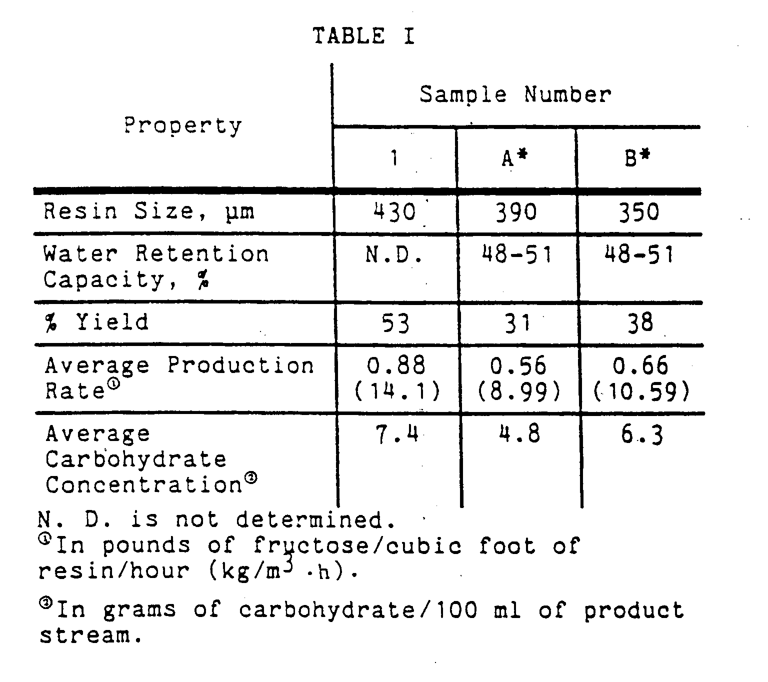

### Example 2

### A. Preparation of Ion-exchange Resin in Multi-stage Polymerization Process

In a suitable polymerization vessel are added 44 parts of a styrene/divinylbenzene mixture (3 percent active DVB) in which are dissolved a peroxide type free radical initiator, and about 100 parts of an aqueous suspension medium containing a carboxymethylmethylcellulose suspending agent The monomer mixture is formed into a plurality of uniform droplets suspended in the aqueous medium, and partially polymerized at 80°C for about five hours to form a seed particle containing some dissolved monomers and residual initiator. Then, in a final polymerization stage, about 56 parts of a styrene/divinylbenzene mixture (5 percent active DVB) are added continuously over a 4- to 4½ -hour period while maintaining the polymerization temperature at 80°C. Following the final monomer addition, the polymerization is continued for an additional four hours at 80°C and two more hours at 110°C. The resulting copolymer is sulfonated to yield a cation-exchange resin having a dry weight capacity of 5.15 meq/g, a water retention capacity of 52.5 percent in the calcium form and an average diameter of 402µm in the calcium form. This resin is referred to herein as Sample No. 2.

Resin Sample No. 2 is used in a fructose/glucose separation as described in Example 1. The yield at 80 percent purity is 41 percent. The production rate is 0.71 pounds fructose/ft³/hour (11.40 kg/m³.h) and the average concentration is 6.3 g/ml. The yield is higher than provided by either Comparative Sample A or Comparative Sample B, even though the resin is larger. In addition, the production rate equals or exceeds that obtained with the Comparative Samples.

### Example 3

A series of ion-exchange resins are used in this example to separate fructose from glucose. Resin Sample Nos. 3-10 are made by sulfonating a copolymer which is prepared according the the general procedure described in Example 1, with the relative amounts of seed particle and monomer mixtures in the initial swell and final polymerization stage being varied, as well as the amount of DVB used in the seed and monomer mixtures. The weight ratios of seed and monomer mixtures used in the polymerization stages, and the amount of DVB used in each are reported in Table II following. Before sulfonation, the apparent cross-link density is determined by toluene swell testing. The water retention capacity and particle size of the resin in the calcium form are also determined. The yield at 80 percent purity provided by the resin when used to separate fructose and glucose as described in Example 1 is determined. The water retention capacity, particle size and percent yield are all reported in Table II. For comparison, the results obtained using two conventional resins are reported (Comparative Samples C and D).

Resin Sample Nos, 11-14 are prepared using the general procedure described in Example 2, varying the amount of DVB used in the monomer mixtures and the relative proportion of monomers used in the polymerization stages, as indicated in Table II. The apparent cross-link density of the copolymer and the water retention capacity, particle size and yield at 80 percent purity provided by the resins are reported in Table II.

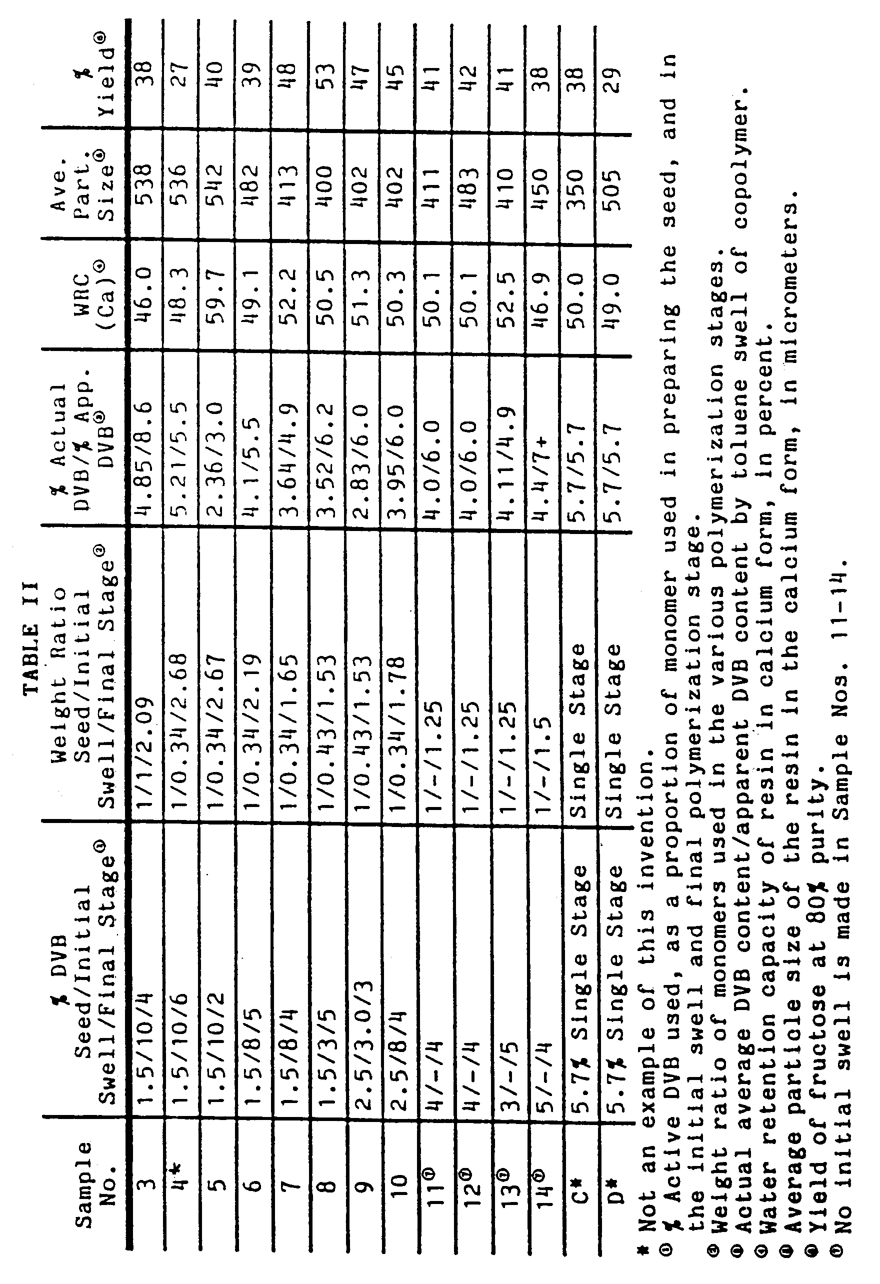

As can be seen from the data presented in Table II, excellent yields are obtained with the process of this invention using ion-exchange resins prepared in a multi-step polymerization process as described herein. In most instances, high yields are obtained even though the resin particles are quite large, which provides the added benefit of low pressure drop across the column. Sample No. 4. has a quite large particle size, and of all resins tested, most generally resembles a conventional single step gel resin in terms of overall properties. It also exhibits an apparent cross- link density very close to the actual cross-link density. For these reasons, its separation efficiency closely resembles that of Comparative Sample D.

### Example 4

### A. Preparation of Ion-exchange Resin in Multi-stage Polymerization Process

In a suitable polymerization kettle is formed a suspension of 500 parts of seed copolymer particles of uniform diameter of about 190µm in 900 parts of water. The seed particles are a copolymer of a monomer mixture of styrene and 2.5 percent active divinylbenzene (DVB). To this suspension are added 213 parts of a mixture of a styrene/divinylbenzene mixture containing 5 percent active divinylbenzene, in which a peroxide initiator is dissolved. This mixture is imbibed by the seed particles over a 60-minute period at room temperature with agitation. Then, 300 parts of an aqueous solution containing a surfactant and a protective colloid (gelatin) is added. The kettle is sealed, nitrogen purged and heated up to 80°C, at which temperature polymerization of the monomers in the initial swell begins. After about one to about two hours of polymerization, a final stage polymerization is begun by continuously adding 740 parts of a styrene/divinylbenzene mixture (3 percent active DVB) over a five-hour period while maintaining the polymerization temperature at 80°C. The reactor is then heated an additional two hours at 80°C followed by another two hours at 110°C. The resulting copolymer particles are cooled, cleaned up and sulfonated to provide a cation-exchange resin having a dry weight capacity of about 5.10 to 5.20 meq/g, water retention capacity of 50.1 percent in the calcium form and a mean diameter of 389µm in the calcium form. This resin is designated Sample No. 15 herein.

### B. Chromatographic Performance Testing

A portion of resin Sample No. 15 is tested for chromatographic performance following the general procedure described in Example 1. The column in this instance has dimensions of 76 mm x 1220 mm. About 1050 to 1200 ml of high fructose corn syrup are fed to the column at a rate of 46 ml/min. Eluting water is then fed at the same rate. A 72 percent yield at 80 percent purity is obtained, at a production rate of 0.99 pound of fructose per cubic foot of resin per hour (15.89 kg/m³.h). The average concentration of carbohydrate in the product cut is 20.6 g/100 ml. For comparison, the same separation, when conducted using Comparative Sample A, gives only a 59 percent yield and a production rate of only 0.93 pounds of fructose per cubic foot of resin per hour (14.93 kg/m³.h) at 80 percent fructose purity. The concentration of carbohydrate in the product cut is also only 17.8 g/100 ml.

This experiment is repeated, this time doubling the feed rate of both the corn syrup and the eluting water. Sample No. 15 provides a 43 percent yield at 80 percent purity, and a production rate of 1.25 pounds of fructose per cubic foot of resin per hour (20.06 kg/m³.h). The average concentration of carbohydrate in the product cut is 13.4 g/100 ml. Under these condition,. Comparative Sample A provides a 36% yield at 80 percent purity, and a production rate of 1.08 pounds of fructose per cubic foot of resin per hour (17.33 kg/m³.h). The average concentration of carbohydrate in the product cut is 12.6 g/100 ml.

As a further experiment, Sample No. 15 is tested under the same conditions set out in Example 1. A 59 percent yield at 80 percent purity, and a production rate of 1.14 pounds of fructose per cubic foot of resin per hour (18.30 kg/m³.h) are achieved. The average concentration of carbohydrate in the product cut is 7.6 g/100 ml.

### Example 5

In a suitable polymerization kettle is formed a suspension of about 400 parts of seed copolymer particles having a uniform diameter of about 250µm in about 700 parts water. The seed particles are a copolymer of a monomer mixture of styrene and 4.0 percent active DVB. To this suspension are added 200 parts of a mixture of styrene and 8 percent active DVB, in which a peroxide initiator is dissolved. This mixture is imbibed by the seed particles over a 60-minute period at room temperature with agitation. Then, 300 parts of an aqueous solution containing a protective colloid and an aqueous polymerization inhibitor is added. The kettle is sealed, nitrogen purged and heated to 80°C for 10 hours, followed by 90 minutes at 95°C and 90 more minutes at 110°C, respectively. The resulting polymer is cleaned up and sulfonated to yield a cation-exchange resin having a dry weight capacity of 5.2 meq/g, a water retention capacity of 47.4 percent in the calcium form and a mean diameter of 460µm in the calcium form. When evaluated in a chromatographic separation as described in Example 1, this resin provided a 38 percent yield at 80 percent purity. Production rate was 0.72 pound of fructose per cubic foot of resin per hour (11.56 kg/m³.h) and concentration was 4.6 g of carbohydrate/100 ml.

## Claims

1. A process for the chromatographic separation of a liquid mixture which contains at least a first component and a second component into a recoverable stream rich in said first component and another recoverable stream rich in said second component, comprising
(a) contacting said liquid mixture with a bed of an ion-exchange resin having an average particle size of from 170µm to 600µm,
(b) eluting said liquid mixture such that the liquid mixture passes through said resin bed under conditions such that the rate of passage of said first component through the resin bed is retarded relative to the rate of passage of said second component, and
(c) recovering a product stream rich in said first component and another product stream rich in said second component,
in which the ion-exchange resin has been prepared by functionalizing a gel-type copolymer made in a multi-stage polymerization process, and has an apparent cross-link density as determined by the swelling characteristics of the resin of at least 1.2 times its actual cross-link density and a water retention capacity, when fully functionalized in the calcium or chloride form, of at least 40 percent by weight.

2. A process as claimed in Claim 1, wherein said ion-exchange resin is a cation-exchange resin.

3. A process as claimed in Claim 2, wherein said ion-exchange resin contains a plurality of sulfonic acid groups.

4. A process as claimed in Claim 2 or Claim 3, wherein said ion-exchange resin is in the calcium form.

5. A process as claimed in any one of the preceding claims, wherein said ion-exchange resin has been prepared by functionalizing a gel-type copolymer made in a multi-stage polymerization process wherein monomer mixtures are polymerized in successive polymerization stages, wherein in a last polymerization stage, a monomer mixture containing substantially no free radical initiator is added under polymerization conditions to a free radical-containing copolymer formed in one or more preceding polymerization stages, imbibed thereby and polymerized therein.

6. A process as claimed in any one of the preceding claims, wherein said ion-exchange resin has been prepared by functionalizing a copolymer made in a batch-seeded process.

7. A process as claimed in any one of the preceding claims, wherein said ion-exchange resin has been prepared by functionalizing a copolymer made by swelling seed copolymer particles with a first monomer mixture, partially polymerizing the first monomer mixture, then cooling said partially polymerized particles below polymerization temperature, swelling said seed particles with a second monomer mixture, and then polymerizing said swollen seed particles.

8. A process as claimed in Claim 7, wherein the seed particles comprise 25 to 60 percent of the final copolymer; the first monomer mixture contains 2 to 5 weight percent cross-linking agent; the first monomer mixture is polymerized to 50 to 75 percent conversion; and the second monomer mixture contains 2 to 6 weight percent cross-linking agent but no free-radical initiator.

9. A process as claimed in Claim 7 wherein the seed particles comprise 10 to 40 weight percent of the final copolymer and are prepared from a monomer mixture containing 0.2 to 4 weight percent of cross-linking agent; the first monomer mixture contains 4 to 8 weight percent cross-linking agent and comprises 10 to 25 weight percent of the final copolymer; the second monomer mixture contains 2 to 6 weight percent cross-linking agent but no free radical initiator and is added over 0.5 to 8 hours; and the total amount of cross-linking agent present is 3 to 6 weight percent of the final copolymer.

10. A process as claimed in any one of the preceding claims, wherein the polymerization is suspension polymerization.

11. A process as claimed in any one of the preceding claims, wherein said copolymer is a copolymer of styrene and divinylbenzene optionally with methyl methacrylate.

12. A process as claimed in any one of the preceding claims, wherein said liquid mixture comprises at least two saccharides.

13. A process as claimed in Claim 12, wherein said saccharides comprise fructose and glucose.

14. A process as claimed in any one of the preceding claims, wherein said ion-exchange resin has an average particle size of 300-450 µm.

15. A process as claimed in any one of the preceding claims, wherein at least 90 volume percent of the ion-exchange resin particles have a diameter between 0.9 and 1.1 times the average diameter.

## Patentansprüche

1. Verfahren für die chromatographische Trennung einer flüssigen Mischung, welche wenigstens eine erste und eine zweite Komponente enthält, in eine an dieser ersten Komponente reiche, gewinnbare Strömung und eine andere an dieser zweiten Komponente reiche, gewinnbare Strömung, umfassend
(a) Inkontaktbringen dieser flüssigen Mischung mit einem Bett eines Ionenaustauscherharzes, das eine Durchschnittsteilchengröße von 170 µm bis 600 µm hat,
(b) Elution dieser flüssigen Mischung derart, daß die flüssige Mischung durch dieses Harzbett unter solchen Bedingungen durchtritt, daß die Durchtrittsgeschwindigkeit dieser ersten Komponente durch das Harzbett relativ zu der Durchtrittsgeschwindigkeit dieser zweiten Komponente verzögert wird, und
(c) Gewinnug einer an dieser ersten Komponente reichen Produktströmung und einer anderen, an dieser zweiten Komponente reichen Produktströmung,
bei welchem das Ionenaustauscherharz durch Funktionalisieren eines in einem Mehrstufenpolymierisationsverfahren hergestellten Copolymeren vom Geltyp hergestellt worden ist, und eine scheinbare Vernetzungsdichte, bestimmt durch die Quelleigenschaften des Harzes, von wenigstens dem 1,2-fachen seiner tatsächlichen Vernetzungsdichte und eine Wasser-Retentionskapazität von wenigstens 40 Gew.-%, wenn in der Calcium- oder Chloridform voll funktionalisiert, aufweist.

2. Verfahren nach Anspruch 1, worin dieses Ionenaustauscherharz ein Kationen-Austauscherharz ist.

3. Verfahren nach Anspruch 2, worin dieses Ionenaustauscherharz eine Vielzahl von Sulfonsäuregruppen enthält.

4. Verfahren nach Anspruch 2 oder Anspruch 3, worin dieses Ionenaustauscherharz in der Calciumform vorliegt.

5. Verfahren nach einem der vorhergehenden Ansprüche, worin dieses Ionenaustauscherharz durch Funktionalisieren eines Copolymeren vom Geltyp hergestellt worden ist, das in einem Mehrstufenpolymerisationsverfahren hergestellt wurde, worin Monomerenmischungen in aufeinanderfolgenden Polymerisationsstufen polymerisiert werden, worin in einer letzten Polymerisationsstufe eine praktisch keinen freiradikalischen Initiator enthaltende Monomerenmischung unter Polymerisationsbedingungen zu einem freie Radikale enthaltenden Copolymeren, das in einer oder mehreren der vorangegangenen Polymerisationsstufen gebildet wurde, zugesetzt wird, hierdurch aufgesogen wird und hierin polymerisiert wird.

6. Verfahren nach einem der vorhergehenden Ansprüche, worin dieses Ionenaustauscherharz durch Funktionalisieren eines Copolymeren hergestellt wurde, das in einem Ansatz-Impf-Verfahren hergestellt wurde.

7. Verfahren nach einem der vorhergehenden Ansprüche, worin dieses Ionenaustauscherharz durch Funktionalisieren eines Copolymeren hergestellt wurde, das durch Quellen von Impf-Copolymerteilchen mit einer ersten Monomerenmischung, partielles Polymerisieren der ersten Monomerenmischung, dann Abkühlen dieser partiell polymerisierten Teilchen unter Polymerisationstemperatur, Quellen dieser Impfteilchen mit einer zweiten Monomerenmischung und dann Polymerisieren dieser gequollenen Impfteilchen hergestellt wurde.

8. Verfahren nach Anspruch 7, worin die Impfteilchen 25 bis 60 % des endgültigen Copolymeren ausmachen; die erste Monomerenmischung 2 bis 5 Gew.-% Vernetzungsmittel enthält; die erste Monomerenmischung bis zu 50 bis 75 % Umwandlung polymerisiert wird; und die zweite Monomerenmischung 2 bis 6 Gew.-% Vernetzungsmittel jedoch keinen freiradikalischen Initiator enthält.

9. Verfahren nach Anspruch 7, worin die Impftelichen 10 bis 40 % des endgültigen Copolymeren ausmachen und aus einer Monomerenmischung hergestellt werden, die 0,2 bis 4 Gew.-% Vernetzungsmittel enthält; die erste Monomerenmischung 4 bis 8 Gew.-% Vernetzungsmittel enthält und 10 bis 25 Gew.-% des endgültigen Copolymeren ausmacht; die zweite Monomerenmischung 2 bis 6 Gew.-% Vernetzungsmittel jedoch keinen freiradikalischen Initiator enthält und während 0,5 bis 8 Stunden zugesetzt wird; und die Gesamtmenge an vorliegendem Vernetzungsmittel 3 bis 6 Gew.-% des endgültigen Copolymeren ausmacht.

10. Verfahren nach einem der vorhergehenden Ansprüche, worin die Polymerisation eine Suspensionspolymerisation ist.

11. Verfahren nach einem der vorhergehenden Ansprüche, worin dieses Copolymere ein Copolymeres aus Styrol und Divinylbenzol, wahlweise mit Methmethacrylat ist.

12. Verfahren nach einem der vorhergehenden Ansprüche, worin diese flüssige Mischung wenigstens zwei Saccharide umfaßt.

13. Verfahren nach Anspruch 12, worin diese Saccharide Fructose und Glucose umfassen.

14. Verfahren nach einem der vorhergehenden Ansprüche, worin dieses Ionenaustauscherharz eine Durchschnittsteilchengröße von 300-450 um besitzt.

15. Verfahren nach einem der vorhergehenden Ansprüche, worin wenigstens 90 Vol.-% der Ionenaustauscherharzteilchen einen Durchmesser zwischen dem 0,9- und 1,1-fachen des Durchschnittsdurchmessers haben.

## Revendications

1. Procédé de séparation chromatographique d'un mélange liquide, qui contient au moins un premier composant et un second composant, en un courant récupérable riche en ledit premier composant et un autre courant récupérable riche en ledit second composant, ledit procédé comprenant :
a) le fait de mettre ledit mélange liquide en contact avec un lit de résine échangeuse d'ions dont les particules ont une taille moyenne de 170 µm à 600 µm,
b) le fait d'éluer ledit mélange liquide de telle sorte que le mélange liquide traverse ledit lit de résine dans des conditions telles que la vitesse de passage dudit premier composant à travers le lit de résine est plus petite que la vitesse de passage dudit second composant, et
c) le fait de récupérer un courant de produit riche en ledit premier composant et un autre courant de produit riche en ledit second composant,
et dans lequel procédé la résine échangeuse d'ions, qui a été préparée par fonctionnalisation d'un copolymère de type gel, fabriqué selon un procédé de polymérisation à étapes multiples, présente une densité apparente de réticulation, déterminée d'après les caractéristiques de gonflement de la résine, valant au moins 1,2 fois sa densité effective de réticulation, ainsi qu'une capacité de rétention d'humidité valant au moins 40 % en poids, lorsqu'elle est complètement fonctionnalisée sous forme chlorure ou sous forme calcium.

2. Procédé conforme à la revendication 1, dans lequel ladite résine échangeuse d'ions est une résine échangeuse de cations.

3. Procédé conforme à la revendication 2, dans lequel ladite résine échangeuse d'ions contient de multiples groupes sulfo.

4. Procédé conforme à la revendication 2 ou 3, dans lequel ladite résine échangeuse d'ions se trouve sous la forme calcium.

5. Procédé conforme à l'une quelconque des revendications précédentes, pour lequel ladite résine échangeuse d'ions a été préparée par fonctionnalisation d'un copolymère de type gel, fabriqué selon un procédé de polymérisation à étapes multiples selon lequel on fait polymériser des mélanges de monomères au cours d'étapes successives de polymérisation, et dans lequel, au cours d'une dernière étape de polymérisation, on ajoute un mélange de monomères ne contenant pratiquement pas d'amorceur de radicaux libres, dans des conditions de polymérisation, à un copolymère contenant des radicaux libres, formé au cours d'une ou de plusieurs étapes précédentes de polymérisation, et ce copolymère s'imbibe de ce mélange, qui polymérise en son sein.

6. Procédé conforme à l'une quelconque des revendications précédentes, pour lequel ladite résine échangeuse d'ions a été préparée par fonctionnalisation d'un copolymère obtenu selon un procédé discontinu avec formation de germes.

7. Procédé conforme à l'une quelconque des revendications précédentes, pour lequel ladite résine échangeuse d'ions a été préparée par fonctionnalisation d'un copolymère que l'on a obtenu en faisant gonfler, avec un premier mélange de monomères, des particules de copolymère constituant des germes, en faisant partiellement polymériser ce premier mélange de monomères, en refroidissant ensuite lesdites particules partiellement polymérisées jusqu'à une température inférieure à la température de polymérisation, en faisant gonfler lesdites particules constituant des germes avec un second mélange de monomères, et en faisant ensuite polymériser lesdites particules constituant des germes et que l'on a fait gonfler.

8. Procédé conforme à la revendication 7, dans lequel lesdites particules constituant des germes représentent de 25 à 60 % du copolymère final, le premier mélange de monomères contient de 2 à 5 % en poids d'un agent de réticulation, on fait polymériser le premier mélange de monomères jusqu'à un taux de conversion de 50 à 75 %, et le second mélange de monomères contient de 2 à 6 % en poids d'un agent de réticulation, mais ne contient pas d'amorceur de radicaux libres.

9. Procédé conforme à la revendication 7, dans lequel lesdites particules constituant des germes représentent de 10 à 40 % en poids du copolymère final et sont préparées à partir d'un mélange de monomères contenant de 0,2 à 4 % en poids d'un agent de réticulation, le premier mélange de monomères contient de 4 à 8 % en poids d'un agent de réticulation et représente de 10 à 25 % en poids du copolymère final, le second mélange de monomères contient de 2 à 6 % en poids d'un agent de réticulation, mais ne contient pas d'amorceur de radicaux libres, et est ajouté en l'espace de 0,5 à 8 heures, et la quantité totale présente d'agent de réticulation représente de 3 à 6 % en poids du copolymère final.

10. Procédé conforme à l'une quelconque des revendications précédentes, dans lequel la polymérisation est une polymérisation en suspension.

11. Procédé conforme à l'une quelconque des revendications précédentes, dans lequel ledit copolymère est un copolymère de styrène et de divinylbenzène, avec éventuellement du méthacrylate de méthyle.

12. Procédé conforme à l'une quelconque des revendications précédentes, dans lequel ledit mélange liquide contient au moins deux saccharides.

13. Procédé conforme à la revendication 12, dans lequel lesdits saccharides comprennent du fructose et du glucose.

14. Procédé conforme à l'une quelconque des revendications précédentes, dans lequel la taille moyenne des particules de ladite résine échangeuse d'ions vaut de 300 à 450 µm.

15. Procédé conforme à l'une quelconque des revendications précédentes, dans lequel au moins 90 % en volume des particules de la résine échangeuse d'ions ont un diamètre valant entre 0,9 et 1,1 fois le diamètre moyen.
